# EUROPÄISCHE PATENTSCHRIFT

(11) **EP 1 430 823 B1**
(45) Veröffentlichungstag und Bekanntmachung des Hinweises auf die Patenterteilung: **26.03.2008**
(21) Anmeldenummer: 03027887.3
(22) Anmeldetag: 04.12.2003
(51) Int. Cl.: A47J 39/00, A21B 3/04, F22B 1/28

(54) **Verfahren und Vorrichtung zum Entkalken von Dampferzeugern für Gargeräte**
Method and apparatus for deliming steam generators for cooking appliances
Procédé et dispositif pour détartrer générateurs de vapeur pour appareils de cuisson

(30) Priorität: 19.12.2002 DE 10259829
(43) Veröffentlichungstag der Anmeldung: 23.06.2004
(73) Patentinhaber: Convotherm Elektrogeräte GmbH, 82436 Eglfing (DE)
(72) Erfinder: Riefenstein, Lutz, 82362 Weilheim/Oberbayern (DE)
(74) Vertreter: Castell, Klaus

(56) Entgegenhaltungen:
- WO-A-00/56195
- US-A- 4 823 767
- US-A- 5 279 676
- US-A- 5 631 033
- US-A- 5 640 946

## Beschreibung

Die Erfindung bezieht sich auf ein Verfahren und eine Vorrichtung zum Entkalken von Dampferzeugern für Gargeräte, wie aus dem Dokument US 5 631 033 bekannt.

Gargeräte, insbesondere Heißluftdämpfern, bei denen die aufzubereitenden Speisen mittels Dampf und Heißluft gegart werden, weisen in der Regel einen Dampferzeuger auf, der den für den Dämpfvorgang notwendigen Dampf liefert.

Damit für eine kontinuierliche Dampferzeugung immer genügend Wasser vorhanden ist und die Heizflächen des Dampferzeugers nicht trocken erhitzt werden, was zum Auslösen eines Sicherheitstemperaturbegrenzers oder zum vorzeitigen Verschleiß der Heizkörper führen würde, sind diese Dampferzeuger mit Wasserfüllstandsüberwachungseinrichtungen versehen. In vorteilhafter Weise werden hierbei Füllstandselektroden eingesetzt, mit deren Hilfe über die elektrische Leitfähigkeit des Wassers der Füllstand im Dampferzeuger gemessen werden kann.

Beim Betrieb solcher Dampferzeuger bereitet hartes und somit mineralhaltiges Wasser Probleme, die nicht nur zu Beeinträchtigungen und kurzzeitigen Störungen, sondern auch zu einem vollständigen Ausfall des Dampferzeugers führen können.

Bei der Erwärmung von Wasser über 60°C fallen die gelösten Mineralien aus und können besonders bei Vorhandensein von Kalzium und Magnesium zu einem harten Kalkbelag führen. Diese Verkalkung führt zu einer Verminderung des Wärmeübergangs zwischen der Heizfläche und dem eingefüllten Wasser, was zu einer Überhitzung der Heizflächen führen kann. Weiterhin kann die Verkalkung im Dampferzeuger zu einer Verstopfung von Zu- und Abläufen führen, insbesondere durch von den Heizflächen sich ablösende Kalkteile.

Aus der EP 0 383 327 A1 ist ein Dampferzeuger für Gargeräte mit einer Entkalkungseinrichtung bekannt, bei welcher in einstellbaren Intervallen in Abhängigkeit von der Betriebsdauer und/oder der Temperatur der Heizeinrichtung automatisch eine Durchspülung des Dampferzeugers und damit eine Abführung von am Boden des Dampferzeugers sich ansammelnden Kalkteilen erfolgt. Hierdurch können aber nur die von den Wänden oder den Heizflächen abgefallenen Kalkteile entfernt werden. Die Spülung erfolgt dabei in unmittelbarer Nähe des Bodens des Dampferzeugers, wodurch diese Sedimentteile ausgetragen werden.

Bei dieser bekannten Entkalkungseinrichtung erfolgt nur eine mechanische Entkalkung, das heißt, die sich am Boden des Entkalkers sammelnden Kalkteilchen werden ausgespült, dagegen erfolgt keine Entkalkung durch Auflösen des insbesondere an der Heizungsoberfläche abgelagerten Kalkes.

Aufgabe der Erfindung ist es deshalb, ein Verfahren und eine Vorrichtung bereit zu stellen, mit deren Hilfe eine chemische Entkalkung in halbautomatischer oder automatischer Weise durchführbar ist.

Diese Aufgabe wird erfindungsgemäß durch die Merkmale der nachfolgenden Ansprüche gelöst.

Unter der Angabe halbautomatisch wird ein Vorgang verstanden, bei dem durch die Gerätesteuerung dem Bediener angezeigt wird, dass ein Entkalkungsvorgang vorgenommen werden muss. Diese Anzeige kann akustisch oder optisch erfolgen, worauf der Betreiber beispielsweise durch Knopfdruck den Entkalkungsvorgang einleitet, der auch vollautomatisch durchgeführt werden kann.

Um das Entkalkungsmittel besser zur Wirkung zu bringen, ist es vorteilhaft, wenn in Weiterbildung der Erfindung für den Entkalkungsvorgang eine Wassertemperatur im Dampferzeuger unterhalb des Siedepunktes vorzugsweise im Bereich von 40-70°C eingestellt wird.

Damit sichergestellt ist, dass der Entkalkungsvorgang nur dann eingeleitet wird, wenn im Garraum keine Speisen behandelt werden, wird in weiterer Ausgestaltung der Erfindung der Entkalkungsvorgang in Abhängigkeit von der Temperatur des Wassers im Dampferzeuger gesteuert. Diese Temperatur, unterhalb deren der Entkalkungsvorgang eingeleitet werden kann, wird so gewählt, dass sie mit Sicherheit unterhalb der Betriebstemperatur des Dampferzeugers liegt. Wenn beispielsweise die Temperatur des Wassers im Dampferzeuger unter 70 °C fällt, so weiß man, dass dieser Dampferzeuger nicht mehr in Betrieb ist, weil die Betriebsbereitschaft eine höhere Wassertemperatur bedingt.

Um eine gute Durchmischung des Entkalkungsmittels im Wasser des Dampferzeugers zu erreichen, damit das Entkalkungsmittel gleichmäßig an allen mit Kalk überzogenen Stellen des Dampferzeugers wirken kann, ist in vorteilhafter weiterer Ausbildung der Erfindung vorgesehen, dass das Entkalkungsmittel auf die Wasseroberfläche des im Dampferzeuger enthaltenen Wassers aufgegeben wird. Das so aufgegebene Entkalkungsmittel kann sich dann im Wasser gleichmäßig verteilen, so dass alle mit Kalk befallenen Stellen der Wirkung des Entkalkungsmittels unterliegen, da während des Entkalkungsvorgangs der Höchstwasserstand vorher eingestellt wurde.

Eine einfache Möglichkeit das Entkalkungsmittel in das Wasser einzubringen besteht darin, dass das Entkalkungsmittel mittels Schwerkraft in den Dampferzeuger eingebracht wird.

Um unter allen Umständen sicher zu stellen, dass das Entkalkungsmittel nicht unkontrolliert in den Dampferzeuger gelangen kann, ist nach einer anderen Ausgestaltung der Erfindung vorgesehen, dass das Entkalkungsmittel, ausgehend von einem gegenüber dem unteren Füllstandsniveau, im Dampferzeuger niedriger gelegenen Niveau hochgefördert wird.

Eine einfache Methode den Verkalkungsgrad festzustellen, besteht erfindungsgemäß darin, dass der Verkalkungsgrad durch messen des Volumens des eingespeisten Wasser im unverkalkten und im verkalkten Zustand des Dampferzeugers festgestellt wird. Die dabei festgestellte Volumendifferenz ist ein direktes Maß für die Menge des im Dampferzeuger angesammelten Kalkes.

Eine weitere vorteilhafte Methode, den Verkalkungsgrad festzustellen besteht darin, dass der Verkalkungsgrad durch Messen der Temperaturänderungsgeschwindigkeit des Wassers im Dampferzeuger bei vorgegebener Heizleistung festgestellt wird.

Es kann auch vorteilhaft sein, den Verkalkungsgrad durch Messen der Oberflächentemperatur des Heizkörpers bei vorgegebener Heizleistung festzustellen. Je höher nämlich der Verkalkungsgrad ist, desto höher wird die Temperatur des Heizkörpers bei einer bestimmten Heizleistung, da die Kalkschicht den Heizkörper isoliert, so dass seine Oberflächentemperatur ansteigt.

Um jede schädliche Einwirkung auf das Gargut im Garraum nach einem Entkalkungsvorgang zu vermeiden, wird in vorteilhafter Weise als Entkalkungsmittel eine lebensmittelverträgliche Säure, z. B. Zitronensäure, verwendet.

Eine erste Vorrichtung zur Durchführung des Verfahrens ist dadurch gekennzeichnet, dass ein Vorratsbehälter für ein Entkalkungsmittel über eine Verbindungsleitung mit dem Dampferzeuger verbunden ist, dass der Vorratsbehälter oberhalb des Dampferzeugers angeordnet ist, dass in der Verbindungsleitung eine steuerbare Dosiervorrichtung und ein steuerbares Absperrventil vorgesehen sind und dass sämtliche zur Einleitung und Durchführung des Entkalkungsvorganges vorgesehenen Einrichtungen und Vorrichtungen von einer Steuereinrichtung oder Regeleinrichtung überwacht sind, welche mit sämtlichen Sensoren und Einrichtungen zur Feststellung des Verkalkungsgrades des Dampferzeugers verbunden ist und die die gemessenen Werte mit vorgegebenen Sollwerten vergleicht und in Abhängigkeit von diesem Vergleich den Entkalkungsvorgang bei vollautomatischen Betrieb einleitet und bei halbautomatischem Betrieb ein Signal für den Betreiber abgibt.

Eine andere Ausgestaltung einer Vorrichtung zur Durchführung des Verfahrens besteht darin, dass ein Vorratsbehälter für ein Entkalkungsmittel über eine Verbindungsleitung mit steuerbarem Absperrventil mit dem Dampferzeuger verbunden ist, dass in der Verbindungsleitung eine Pumpe vorgesehen ist und dass sämtliche zur Einleitung und Durchführung des Entkalkungsvorganges vorgesehenen Einrichtungen und Vorrichtungen von einer Steuereinrichtung oder Regeleinrichtung überwacht sind, welche mit sämtlichen Sensoren und Einrichtungen zur Feststellung des Entkalkungsgrades des Dampferzeugers verbunden ist und die die gemessenen Werte mit vorgegebenen Sollwerten vergleicht und in Abhängigkeit von diesem Vergleich den Entkalkungsvorgang bei vollautomatischem Betrieb einleitet und bei halbautomatischem Betrieb ein Signal für den Betreiber abgibt.

Vorteilhafterweise kann in der Verbindungsleitung eine steuerbare Dosiervorrichtung vorgesehen sein.

Eine gesonderte Dosiervorrichtung kann entfallen, wenn die Pumpe als regelbare Dosierpumpe ausgebildet ist.

Wenn eine Pumpe in der Verbindungsleitung zwischen Vorratsbehälter und Dampferzeuger vorgesehen ist, ist es vorteilhaft, wenn der Vorratsbehälter unterhalb des unteren Füllstandsniveaus des Dampferzeugers angeordnet ist, wodurch sichergestellt ist, dass das Entkalkungsmittel nicht in unbeabsichtigter Weise in den Dampferzeuger gelangen kann.

Die Erfindung wird nachfolgend anhand zweier in der Zeichnung dargestellter Ausführungsbeispiele beschrieben. In der Zeichnung zeigen:
- **Figur 1:**: Eine erste Ausführungsform einer Vorrichtung zur Entkalkung eines Dampferzeugers und
- **Figur 2:**: Eine zweite Vorrichtung zur Entkalkung eines Dampferzeugers für Gargeräte.

In der nachfolgenden Beschreibung sind für übereinstimmende Teile, Vorrichtungen und Einrichtungen beider Ausführungsformen die gleichen Bezugszahlen verwendet.

In einem Dampferzeuger 1 sind Füllstandselektroden 2 und 3 für die Messung des maximalen Füllstandes und des minimalen Füllstandes für das Betriebswasser im Dampferzeuger vorgesehen. Zur Dampferzeugung ist der Dampferzeuger mit elektrischen Heizkörpern 7 ausgestattet. Für die Zuleitung von Frischwasser sind Leitungen 4 und 5 vorgesehen, die von einer gemeinsamen Leitung ausgehen, welche durch ein Absperrventil 6 überwacht ist. Es ist aber auch möglich, dass nur die eine Leitung 4 oder die andere Leitung 5 vorgesehen ist.

Der Dampferzeuger weist einen schräg verlaufenden Boden auf, an dessen tiefster Stelle eine Abflussleitung 8 für das Entleeren des Dampferzeugers ausgeht, die durch ein Ventil 9 überwacht ist.

Über eine Öffnung 17 ist der Dampferzeuger 1 mittels einer nicht dargestellten Leitung mit einem ebenfalls nicht dargestellten Garraum verbunden. Über diese Öffnung 17 wird der im Dampferzeuger 1 gebildete Dampf, welcher über der Wasseroberfläche 10 gesammelt wird, in den Garraum geleitet.

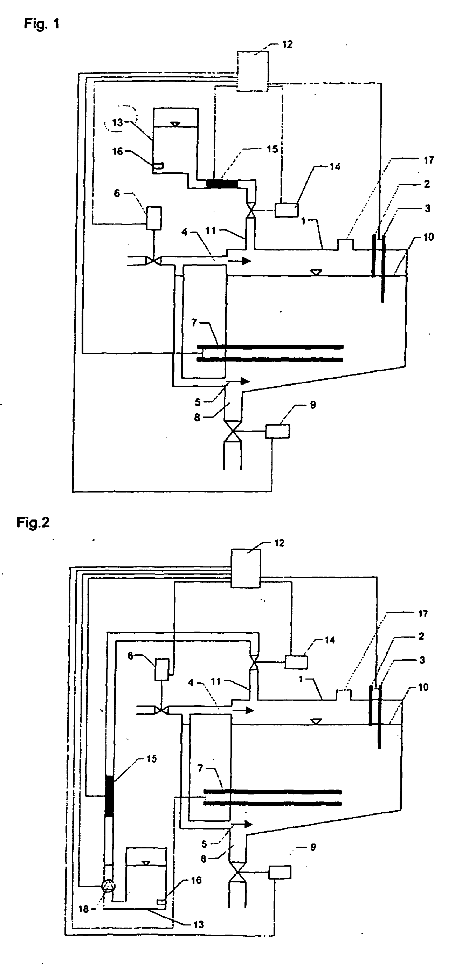

Zur Entkalkung des Dampferzeugers 1 ist ein Vorratsbehälter für Entkalkungsmittel 13 vorgesehen, der sich bei der Vorrichtung nach Figur 1 oberhalb des Dampferzeugers 1 und bei der Vorrichtung nach Figur 2 unterhalb des Dampferzeugers 1 befindet. Über eine Verbindungsleitung 11 ist der Vorratsbehälter 13 mit dem Dampferzeuger in der Weise verbunden, dass unabhängig von der Anordnung des Vorratsbehälters das Entkalkungsmittel auf die Wasseroberfläche 10 aufgebracht wird. In der Verbindungsleitung 11 zwischen Vorratsbehälter 13 und Dampferzeuger 1 sind eine steuerbare oder regelbare Dosiereinrichtung 15 und ein steuerbares Absperrventil 14 vorgesehen. Mit 16 ist eine Füllstandselektrode im Vorratsbehälter 13 bezeichnet. Eine mit 18 bezeichnete Pumpe bei der Vorrichtung nach Figur 2 fördert das Entkalkungsmittel aus dem tiefer gelegenen Vorratsbehälter 13 nach oben, so dass es von oben auf die Wasseroberfläche 10 aufgebracht werden kann. Die Pumpe 18 kann auch als regelbare Dosierpumpe ausgebildet sein.

Eine insgesamt mit 12 bezeichnete Steuereinrichtung oder Regeleinrichtung ist vorgesehen und mit allen für den Entkalkungsvorgang notwendigen Sensoren, Vorrichtungen und Einrichtungen verbunden, um einerseits die notwendigen Messwerte zu erfassen, die ein Maß für den Entkalkungsgrad sind, und andererseits die entsprechenden Einrichtungen und Vorrichtungen zu steuern und zu regeln. Wie aus den beiden Figuren ersichtlich ist, ist die Steuervorrichtung 12 über entsprechende Leitungen mit den Heizkörpern 7 dem Absperrventil 6, der Dosiervorrichtung 15, dem Absperrventil 14, den Füllstandselektroden 2 und 3, dem Absperrventil 9 und der Pumpe 18 verbunden.

Der Entkalkungsvorgang wird nachfolgend beschrieben.

Wenn über eine nicht dargestellte Einrichtung, die in der Lage ist die Volumenunterschiede bei unverkalktem und bei verkalktem Dampferzeuger zu messen, festgestellt wird, dass ein entsprechender Verkalkungsgrad erreicht ist, wobei der Verkalkungsgrad auch durch einen speziellen Sensor oder durch Messen der Temperaturänderungsgeschwindigkeit des Wassers im Dampferzeugers feststellbar ist, so wird von der Steuerund Regelvorrichtung 12, die diese Werte erhält und mit entsprechenden Sollwerten vergleicht, die in der Verbindungsleitung 11 zwischen Vorratsbehälter 13 und Dampferzeuger 1 vorgesehene Dosiervorrichtung 15 für den Durchlass einer bestimmten Entkalkungsmittelmenge eingestellt und das Absperrventil 14 geöffnet, so dass das Entkalkungsmittel von oben auf die Wasseroberfläche 10 in den Dampferzeuger gelangen kann. Vor der Einleitung dieses Vorganges wird der Dampferzeuger bis auf seinen höchsten Füllstand, der durch die Elektrode 3 feststellbar ist, aufgefüllt und die Wassertemperatur im Dampferzeuger auf einen Wert unterhalb des Siedepunktes vorzugsweise auf einen Wert zwischen 50°C und 70°C eingestellt. Weiterhin wird die Temperatur der Heizkörper 7 gemessen, um sicherzustellen, dass der Dampferzeuger sich nicht in einem Betriebszustand für einen Garvorgang befindet, das heißt der Entkalkungsvorgang findet immer zeitlich außerhalb eines Garvorganges statt, um sicherzustellen, dass kein Entkalkungsmittel mit Speisen im Garraum in Verbindung kommen kann. Nach einer gewissen Einwirkzeit des Entkalkungsmittels auf den abgelagerten Kalk wird durch die Steuervorrichtung 12 das Absperrventil 9 geöffnet und das mit gelösten Kalk beladene Wasser über die Leitung 9 entleert. Hieran kann sich mindestens ein Spülvorgang mit Frischwasser anschließen.

Der Entkalkungsvorgang findet bei der Vorrichtung nach Figur 2 in gleicher Weise statt, mit der Ausnahme, dass das Entkalkungsmittel nicht durch Schwerkraft von dem höher gelegenen Vorratsbehälter 13 bei der Ausführungsform nach Figur 1, sondern durch eine Pumpe 18 von dem tiefer gelegenen Vorratsbehälter 13 hochgepumpt wird, um auch bei dieser Ausführungsform auf die Wasseroberfläche 10 zu gelangen.

Ist nur ein halbautomatischer Betrieb vorgesehen, so wird von der Steuer- und Regelvorrichtung 12 ein akustisches oder optisches Signal ausgegeben, wenn ein bestimmter Verkalkungsgrad festgestellt wird. Auf dieses Signal hin muss dann der Betreiber den Entkalkungsvorgang bewusst auslösen. Beim vollautomatischen Betrieb wird der Entkalkungsvorgang nach der Feststellung des entsprechenden Verkalkungsgrades ohne Einwirkung des Betreibers ausgelöst, wobei in beiden Fällen der Entkalkungsvorgang nur dann möglich ist, wenn sich das Gargerät nicht in Betrieb befindet. Während des Betriebes des Gargerätes wird das Absperrventil 14 über die Steuer- und Regelvorrichtung geschlossen gehalten, so dass ein Entkalkungsvorgang nicht eingeleitet werden kann.

## Patentansprüche

1. Verfahren zum Entkalken eines Dampferzeugers für ein Gargerät zeitlich außerhalb eines Garvorgangs mittels eines Entkalkungsmittels und in Abhängigkeit von einer Betriebsdauer und/oder von einem festgestellten Verkalkungsgrad des Dampferzeugers,
***dadurch gekennzeichnet, dass***
zum Entkalken ein automatisierter Entkalkungsvorgang ausgelöst wird, und zwar entweder halbautomatisch nach Ausgabe eines Signals für einen Benutzer oder vollautomatisch,
wobei der automatische Entkalkungsvorgang die folgenden Schritte aufweist:
- Einbringen des Entkalkungsmittels in dosierbarer Menge bei Höchstwasserstand,
- Entleeren des Dampferzeugers nach einer vorgegebenen Einwirkzeit des Entkalkungsmittels und
- Durchführen mindestens eines Spülvorgangs mit Frischwasser.

2. Verfahren nach Anspruch 1, ***dadurch gekennzeichnet, dass*** für den Entkalkungsvorgang eine Wassertemperatur im Dampferzeuger unterhalb des Siedepunktes, vorzugsweise im Bereich von 40 °C bis 70 °C, eingestellt wird.

3. Verfahren nach Anspruch 1 oder 2, ***dadurch gekennzeichnet, dass*** der Entkalkungsvorgang in Abhängigkeit von der Temperatur des Wassers im Dampferzeuger gesteuert wird.

4. Verfahren nach einem der Ansprüche 1 bis 3, ***dadurch gekennzeichnet, dass*** das Entkalkungsmittel auf eine Wasseroberfläche des im Dampferzeuger enthaltenen Wassers aufgegeben wird.

5. Verfahren nach einem der Ansprüche 1 bis 4, ***dadurch gekennzeichnet, dass*** das Entkalkungsmittel mittels Schwerkraft in den Dampferzeuger eingebracht wird.

6. Verfahren nach einem der Ansprüche 1 bis 4, ***dadurch gekennzeichnet, dass*** das Entkalkungsmittel ausgehend von einem gegenüber dem unteren Füllstandsniveau im Dampferzeuger niedriger gelegenen Niveau hochgefördert wird.

7. Verfahren nach einem der Ansprüche 1 bis 6, ***dadurch gekennzeichnet, dass*** der Verkalkungsgrad durch Messen des Volumens des eingespeisten Wassers in unverkalktem und in verkalktem Zustand des Dampferzeugers festgestellt wird.

8. Verfahren nach einem der Ansprüche 1 bis 6, ***dadurch gekennzeichnet, dass*** der Verkalkungsgrad durch Messen einer Temperaturänderungsgeschwindigkeit des Wasser im Dampferzeuger bei vorgegebener Heizleistung festgestellt wird.

9. Verfahren nach einem der Ansprüche 1 bis 6, ***dadurch gekennzeichnet, dass*** der Verkalkungsgrad durch Messen einer Oberflächentemperatur eines Heizkörpers bei vorgegebener Heizleistung festgestellt wird.

10. Verfahren nach einem der Ansprüche 1 bis 8, ***dadurch gekennzeichnet, dass*** als Entkalkungsmittel eine lebensmittelverträgliche Säure, beispielsweise Zitronensäure, verwendet wird.

11. Vorrichtung zum Durchführen des Verfahrens nach einem der Ansprüche 1 bis 10, wobei ein Vorratsbehälter (13) für ein Entkalkungsmittel über eine Verbindungsleitung (11) mit einem steuerbaren Absperrventil (14) mit dem Dampferzeuger (1) verbunden ist,
***dadurch gekennzeichnet, dass***
sämtliche zur Einleitung und Durchführung des Entkalkungsvorganges vorgesehenen Einrichtungen und Vorrichtungen von einer Steuer- oder Regeleinrichtung (12) überwacht sind, welche mit sämtlichen Sensoren und Einrichtungen zur Feststellung des Verkalkungsgrades des Dampferzeugers (1) verbunden ist und welche gemessene Werte mit vorgegebenen Sollwerten vergleicht und in Abhängigkeit von diesem Vergleich den Entkalkungsvorgang bei vollautomatischem Betrieb einleitet und bei halbautomatischem Betrieb ein Signal für den Betreiber abgibt,
wobei in der Verbindungsleitung (11) eine steuerbare Dosiervorrichtung (15) vorgesehen ist und
wobei entweder der Vorratsbehälter (13) oberhalb des Dampferzeugers (1) angeordnet ist oder in der Verbindungsleitung (11) eine Pumpe (18) vorgesehen ist.

12. Vorrichtung nach Anspruch 11, ***dadurch gekennzeichnet, dass*** die Pumpe (18) als regelbare Dosierpumpe ausgebildet ist.

13. Vorrichtung nach Anspruch 11, ***dadurch gekennzeichnet, dass*** der Vorratsbehälter (13) unterhalb des unteren Füllstandsniveaus des Dampferzeugers (1) angeordnet ist.

## Claims

1. A method for descaling a steam generator of a cooking device at another time than during a cooking process by means of a descaling agent and independently from the duration of operation and/or from the degree of calcification of the steam generator,
***characterized in that***
an automated descaling process is activated for descaling, namely either semi-automatically after emission of a signal for a user or fully automatically,
the automatic descaling process having the following steps:
- bringing in the descaling agent in measurable amounts at the highest water level,
- emptying the steam generator after a given reaction time of the descaling agent and
- conducting at least one rinsing process with fresh water.

2. The method according to claim 1, ***characterized in that*** during the descaling process, the temperature of the water in the steam generator is adjusted to be lower than the boiling point, preferably around 40°C to 70°C.

3. The method according to claim 1 or 2, ***characterized in that*** the descaling process is conducted independently from the temperature of the water in the steam generator.

4. The method according to one of the claims 1 to 3, ***characterized in that*** the descaling agent is placed on the surface of the water contained in the steam generator.

5. The method according to one of the claims 1 to 4, ***characterized in that*** the descaling agent is brought into the steam generator by means of the gravitational force.

6. The method according to one of the claims 1 to 4, ***characterized in that*** issuing from a lower level than the lower charging level in the steam generator, the descaling agent is conveyed upwards.

7. The method according to one of the claims 1 to 6, ***characterized in that*** the degree of calcification is determined by measuring the volume of water that is fed into a calcified and into a clean steam generator.

8. The method according to one of the claims 1 to 6, ***characterized in that*** the degree of calcification is determined by measuring the speed of the temperature variations of the water inside the steam generator at a given heating power output.

9. The method according to one of the claims 1 to 6, ***characterized in that*** the degree of calcification is determined by measuring the surface temperature of a heating device at a given heating power output.

10. The method according to one of the claims 1 to 8, ***characterized in that*** a food compatible acid, for example citric acid is used as a descaling agent.

11. A device for carrying out the method according to one of the claims 1 to 10, a storage container (13) for a descaling agent is connected to the steam generator (1) via a connecting duct (11) with a controllable shut-off valve (14),
***characterized in that***
all devices and apparatuses provided for initiating and conducting the descaling process are controlled by a controlling or regulating device which is connected to all sensors and devices for determining the degree of calcification of the steam generator (1) and which compares measured values with given reference values and depending on this comparison initiates the descaling process when operating fully automatically and gives a signal to the user when operating semi-automatically,
a controllable dosing apparatus (15) being provided in the connecting duct (11) and
either the storage container (13) being disposed above the steam generator (1) or a pump (18) being provided in the connecting duct (11).

12. The apparatus according to claim 11, ***characterized in that*** the pump (18) is configured as a dosing pump adapted to being adjusted.

13. The apparatus according to claim 11, ***characterized in that*** the storage container (13) is disposed below the lower charging level of the steam generator (1).

## Revendications

1. Procédé pour détartrer en différé par rapport à un processus de cuisson un générateur de vapeur pour un appareil de cuisson au moyen d'un détartrant et en fonction de la durée d'utilisation et/ou d'un degré d'entartrage constaté du générateur de vapeur,
***caractérisé en ce qu'***
afin de détartrer, un processus de détartrage automatisé est déclenché, à savoir soit de manière semi-automatique après émission d'un signal à l'intention d'un utilisateur ou de manière entièrement automatique,
le processus de détartrage automatique comportant les étapes suivantes :
- introduction du détartrant lorsque le niveau d'eau est le plus élevé en quantités susceptibles d'être dosées,
- vidange du générateur de vapeur après avoir laissé agir le détartrant pour une durée donnée et
- exécution d'au moins un processus de rinçage avec de l'eau fraîche.

2. Procédé selon la revendication 1, ***caractérisé en ce que*** pour le processus de détartrage, une température de l'eau à l'intérieur du générateur de vapeur est réglée de manière à être inférieure au point d'ébullition, de préférence dans la zone entre 40°C et 70°C.

3. Procédé selon la revendication 1 ou 2, ***caractérisé en ce que*** le processus de détartrage est commandé en fonction de la température de l'eau à l'intérieur du générateur de vapeur.

4. Procédé selon l'une quelconque des revendications 1 à 3, ***caractérisé en ce que*** le détartrant est déposé sur la surface de l'eau contenue à l'intérieur du générateur de vapeur.

5. Procédé selon l'une quelconque des revendications 1 à 4, ***caractérisé en ce que*** le détartrant est introduit dans le générateur de vapeur au moyen de la force de gravité.

6. Procédé selon l'une quelconque des revendications 1 à 4, ***caractérisé en ce que*** le détartrant est poussé vers le haut à partir d'un niveau situé plus bas que le niveau de remplissage inférieur du générateur de vapeur.

7. Procédé selon l'une quelconque des revendications 1 à 6, ***caractérisé en ce que*** le degré d'entartrage est déterminé en mesurant le volume d'eau introduit à l'état entartré et à l'état non entartré du générateur de vapeur.

8. Procédé selon l'une quelconque des revendications 1 à 6, ***caractérisé en ce que*** le degré d'entartrage est déterminé en mesurant, avec une puissance de chauffe donnée, la vitesse de variation de la température de l'eau à l'intérieur du générateur de vapeur.

9. Procédé selon l'une quelconque des revendications 1 à 6, ***caractérisé en ce que*** le degré d'entartrage est déterminé en mesurant, avec une puissance de chauffe donnée, la température de surface d'un corps de chauffe.

10. Procédé selon l'une quelconque des revendications 1 à 8, ***caractérisé en ce qu'***un acide compatible avec les aliments, comme par exemple de l'acide citrique, est utilisé en tant que détartrant.

11. Dispositif pour mettre en oeuvre le procédé selon l'une quelconque des revendications 1 à 10, un conteneur de stockage (13) pour un détartrant étant connecté avec le générateur de vapeur (1) via une conduite de connexion (11) avec une vanne d'arrêt (14) commandable,
***caractérisé en ce que***
l'ensemble des organes et dispositifs prévus pour initier et mettre en oeuvre le processus de détartrage sont contrôlés par un organe de commande ou de réglage (12) lequel est connecté avec l'ensemble des capteurs et organes pour déterminer le degré d'entartrage du générateur de vapeur (1) et lequel compare les valeurs mesurées avec des valeurs de consigne données et, en fonction de cette comparaison, initie le processus de détartrage en mode entièrement automatique et émet un signal pour l'utilisateur en mode semi-automatique,
un dispositif de dosage commandable (15) étant prévu dans la conduite de connexion (11) et
le conteneur de stockage (13) étant disposé au-dessus du générateur de vapeur (1) ou bien une pompe (18) étant prévue dans la conduite de connexion (11).

12. Dispositif selon la revendication 11, ***caractérisé en ce que*** la pompe (18) est configurée comme une pompe de dosage réglable.

13. Dispositif selon la revendication 11, ***caractérisé en ce que*** le conteneur de stockage (13) est disposé en dessous du niveau de remplissage inférieur du générateur de vapeur (1)
